# EUROPEAN PATENT SPECIFICATION

(11) **EP 4 379 925 B1**
(45) Date of publication and mention of the grant of the patent: **12.08.2026**
(21) Application number: 22904590.1
(22) Date of filing: 05.12.2022
(51) Int. Cl.: H01M 10/04, H01M 10/6555, H01M 10/6557, H01M 10/613, H01M 50/264, H01M 10/625, F28D 1/03, H01M 50/213, H01M 10/643, H01M 10/647

(54) **ALIGNING DEVICE AND ASSEMBLING SYSTEM FOR BATTERY MODULE ASSEMBLY INCLUDING THE SAME**
AUSRICHTVORRICHTUNG UND MONTAGESYSTEM FÜR DIE MONTAGE VON BATTERIEMODULEN, DAS DIESE ENTHÄLT
DISPOSITIF D'ALIGNEMENT ET SYSTÈME D'ASSEMBLAGE POUR L'ASSEMBLAGE DE MODULES DE BATTERIE COMPRENANT CE DISPOSITIF

(30) Priority: 07.12.2021 KR 20210174262
(43) Date of publication of application: 05.06.2024
(73) Proprietor: LG Energy Solution, Ltd., Seoul 07335 (KR)
(72) Inventor: PARK, Hyeong-Min, Daejeon 34122 (KR); PARK, Geon-Tae, Daejeon 34122 (KR); KANG, Choon-Kwon, Daejeon 34122 (KR)
(74) Representative: Plasseraud IP
(86) International application number: PCT/KR2022/019606
(87) International publication number: WO 2023/106760

(56) References cited:
- CN-A- 113 474 938
- GB-A- 2 553 578
- JP-A- 2021 174 647
- KR-A- 20040 026 543
- KR-A- 20090 011 601
- KR-A- 20180 108 179
- KR-A- 20210 127 490
- US-A1- 2004 069 620

## Description

### TECHNICAL FIELD

The present disclosure relates to an aligning device and an assembling system for a battery module assembly including the same.

The present application claims priority to Korean Patent Application No. 10-2021-0174262 filed on December 7, 2021 in the Republic of Korea.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

When a battery pack is configured by connecting a plurality of battery cells in series/parallel, a method of first configuring a battery module including at least one battery cell and adding other elements by using the at least one battery module to configure a battery pack is general.

A conventional battery module is generally configured to include a plurality of battery cells and a cell frame accommodating the plurality of battery cells. A conventional cell frame is generally composed of an assembly of a plurality of plates such as a front plate, a rear plate, a side plate, a lower plate, and an upper plate to accommodate the plurality of battery cells and secure rigidity.

However, the conventional battery module is disadvantageous in terms of cost competitiveness and manufacturing efficiency since manufacturing cost increases and the assembly process is complicated due to the characteristics of a cell frame structure composed of an assembly of a plurality of plates.

In addition, the conventional battery module is disadvantageous in terms of energy density since the size of the entire battery module is increased according to the cell frame structure composed of an assembly of a plurality of plates.

Therefore, when manufacturing a battery module or a battery pack, a method for implementing a frameless structure instead of such a cell frame structure is requested. Relevant prior art can be found in GB 2 553 578 A, KR 2004 0026543 A and US 2004/069620 A1.

### DISCLOSURE

### Technical Problem

The present disclosure is directed to providing an aligning device capable of implementing a frameless structure and an assembling system for a battery module assembly including the same.

In addition, the present disclosure is directed to providing an aligning device capable of reducing manufacturing cost and minimizing an assembly space, and an assembling system for a battery module assembly including the same.

However, the technical problem to be solved by the present disclosure is not limited to the above-mentioned problem, and other problems not mentioned will be clearly understood by those skilled in the art from the present disclosure described below.

### Technical Solution

In the present invention, there is provided an assembling system for a battery module assembly, comprising an aligning device, which assembles two rows of battery cells and a cooling unit to form a cell assembly, the aligning device comprising: a pair of guide jigs configured to support the two rows of battery cells; a cell spacing adjusting jig connected to the pair of guide jigs and configured to adjust the spacing of battery cells in each row; and a cooling unit gripper configured to dispose the cooling unit between the pair of guide jigs, according to the independent claim 1.

More preferably, the pair of guide jigs may be provided to be slidable along a direction toward the cooling unit gripper and a direction opposite to the cooling unit gripper.

More preferably, the pair of guide jigs may pressurize the battery cells in each row through the sliding, so that the battery cells in each row come into close contact with both side surfaces of the cooling unit.

More preferably, the cell spacing adjusting jig may be slidably mounted on one side of the pair of guide jigs, and during the sliding, at least a part thereof may penetrate the pair of guide jigs and slide between the battery cells in each row to adjust the spacing of the battery cells in each row.

More preferably, the cell spacing adjusting jig may include an adjusting jig body slidably mounted on one side of each guide jig; and a plurality of spacing adjusting portions that protrudes from the adjusting jig body by a predetermined length, and during the sliding, slides between the battery cells in each row through each guide jig to widen the spacing of the battery cells in each row at a predetermined interval.

More preferably, the plurality of spacing adjusting portions may be spaced apart by a predetermined distance at equal intervals from each other along a longitudinal direction of the adjusting jig body.

More preferably, the aligning device may comprise a cell support provided on the pair of guide jigs and configured to support the battery cells.

More preferably, the cell support may be provided as a magnetic member.

More preferably, the aligning device may comprise an aligning gripper provided on an upper side of the pair of guide jigs and configured to pressurize and fix an upper end of two rows of battery cells disposed with the cooling unit interposed therebetween.

More preferably, the pair of guide jigs may be provided to be tiltable at a predetermined angle with the cooling unit gripper interposed therebetween.

More preferably, in the aligning device, the cooling unit may be mutually bonded between the two rows of battery cells to form the cell assembly.

More preferably, the assembling system for a battery module assembly may include a first transfer device configured to transfer the plurality of battery cells in two rows and guide the plurality of battery cells toward the aligning device; a second transfer device configured to transfer the cell assembly assembled by the aligning device toward a structure assembling device for assembly with a side structure unit that covers the battery cells; and the structure assembling device configured to form the battery module assembly by arranging a plurality of side structure units between the battery cells of at least one cell assembly transferred by the second transfer device.

More preferably, the cell assembly is formed by bonding the cooling unit aligned between the two rows of battery cells to the two rows of battery cells using an adhesive (G).

More preferably, the structure assembling device may mutually bond the plurality of side structure units and the at least one cell assembly.

### Advantageous Effects

According to various embodiments as described above, it is possible to provide an aligning device capable of implementing a frameless structure and an assembling system for a battery module assembly including the same.

In addition, according to various embodiments as described above, it is possible to provide an assembling system for a battery module assembly, comprising an aligning device capable of reducing manufacturing cost and minimizing an assembly space.

In addition, various additional effects can be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for explaining an assembling system for a battery module assembly according to an embodiment of the present disclosure.
FIG. 2 is a schematic diagram for explaining an aligning device of the assembling system for a battery module assembly of FIG. 1.
FIG. 3 is a diagram for explaining the main part of the aligning device of FIG. 2.
FIG. 4 is a schematic cross-sectional view of the aligning device of FIG. 2.
FIG. 5 is a schematic diagram for explaining a structure assembling device of the assembling system for a battery module assembly of FIG. 1.
FIG. 6 is a schematic diagram for explaining a pre-working device of the assembling system for a battery module assembly of FIG. 1.
FIGS. 7 and 8 are diagrams for explaining the operation of a first transfer device of the assembling system for a battery module assembly of FIG. 1.
FIGS. 9 to 13 are diagrams for explaining the operation of the aligning device of the assembling system for a battery module assembly of FIG. 1.
FIGS. 14 to 16 are diagrams for explaining the operation of an aligning device according to another embodiment of the assembling system for a battery module assembly of FIG. 1.
FIGS. 17 and 18 are diagrams for explaining the operation of a second transfer device of the assembling system for a battery module assembly of FIG. 1.
FIGS. 19 to 23 are diagrams for explaining the pre-processing operation of a cooling unit through the pre-working device of the assembling system for a battery module assembly of FIG. 1.
FIGS. 24 to 26 are diagrams for explaining the pre-processing operation of a side structure unit through the pre-working device of the assembling system for a battery module assembly of FIG. 1.
FIGS. 27 to 29 are diagrams for explaining the operation of a structure assembling device of the assembling system for a battery module assembly of FIG. 1.
FIG. 30 is a diagram for explaining a battery module assembly assembled through the assembling system for a battery module assembly of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure.

Meanwhile, in the present specification, terms indicating directions such as up, down, left, right, front, and back may be used, but these terms are only for convenience of description, and it is obvious to those skilled in the art that they may vary depending on the location of the target object or the location of the observer.

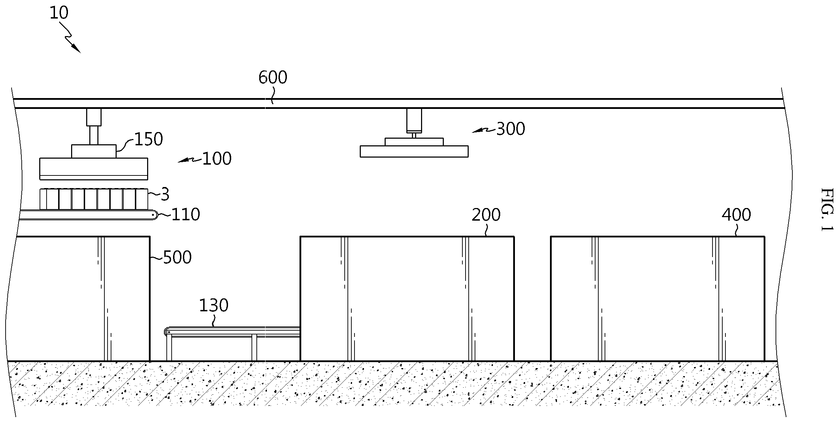

FIG. 1 is a diagram for explaining an assembling system for a battery module assembly according to an embodiment of the present disclosure.

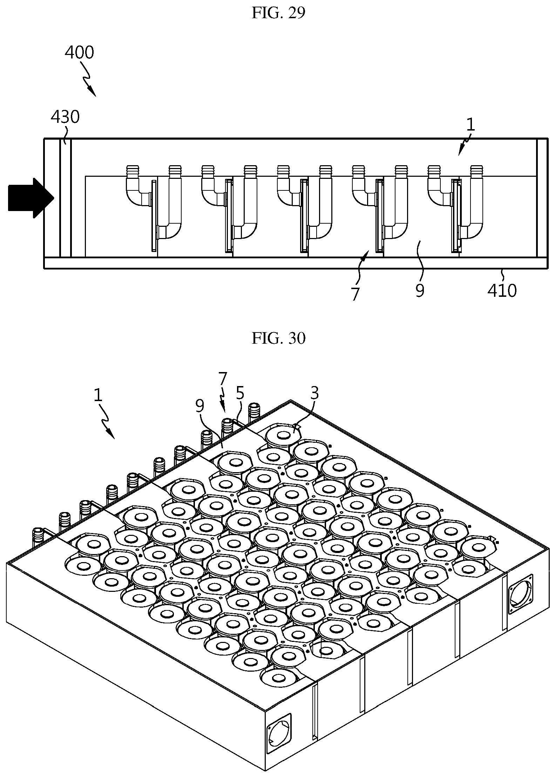

Referring to FIG. 1, the assembling system 10 for a battery module assembly (1, see FIG. 30) may include a first transfer device 100, an aligning device 200, and a second transfer device 300.

The first transfer device 100 may transfer a plurality of battery cells 3 in two rows. The first transfer device 100 may guide the plurality of battery cells 3 toward the aligning device 200 to be described later.

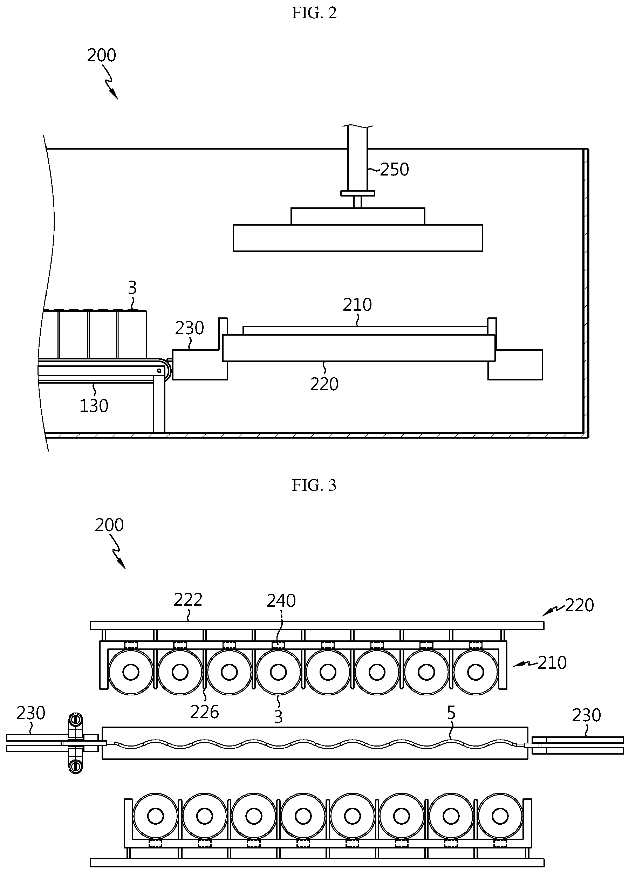

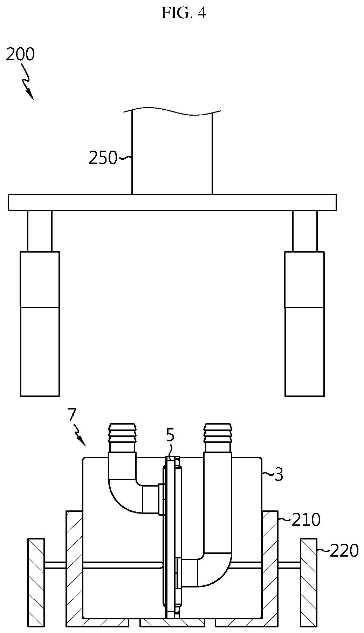

The aligning device 200 assembles a cell assembly (7, see FIG. 4) by aligning a cooling unit (5, see FIG. 3) between two rows of battery cells 3 transferred by the first transfer device 100. The cell assembly 7 is formed of the battery cells 3 and the cooling unit 5.

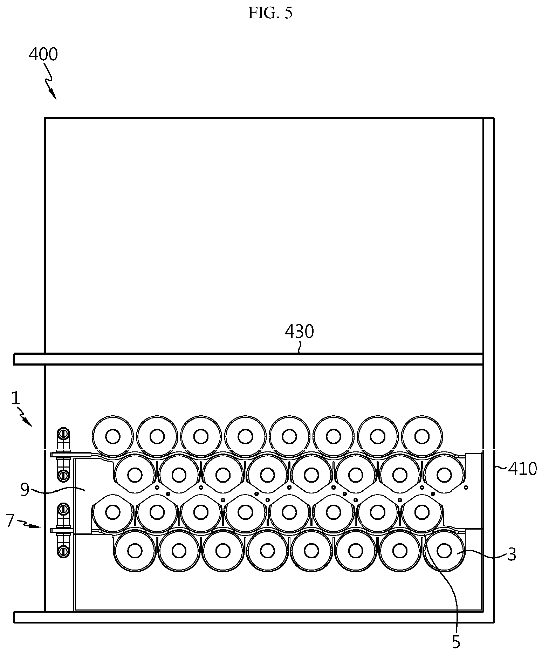

The second transfer device 300 may transfer the cell assembly 7 assembled by the aligning device 200 toward the structure assembling device 400 for assembly with a side structure unit (9, see FIG. 5) that covers the battery cells 3. The structure assembling device 400 described later may assemble the cell assembly 7 transferred by the second transfer device 300 with the side structure unit 9 to manufacture a battery module assembly (1, see FIG. 30).

In this embodiment, through the assembling system 10 as described above, the battery module assembly (1, see FIG. 30) provided with a cell assembly 7 formed of the battery cells 3 and the cooling unit 5 and a side structure unit 9 assembled with the cell assembly 7 may be implemented.

In this embodiment, the battery module assembly 1 fixes and supports the cell assembly 7 only by the side structure unit 9, and thus it is possible to omit a conventional frame structure provided as an assembly of a plurality of plate structures such as an upper plate, a lower plate, a front plate, a rear plate, and a side plate. That is, the battery module assembly 1 according to this embodiment may be provided to have a frameless structure.

The battery module assembly 1 is provided in one or in plurality, and by adding a component for electrical connection, etc., a battery pack may be configured and mounted on a vehicle such as an automobile or a mechanism or structure such as an energy storage system.

In this way, by assembling the battery module assembly 1 of a frameless structure, the assembling system 10 according to this embodiment may reduce manufacturing cost and simplify the assembly process compared to the conventional cell frame structure, thereby significantly improving cost competitiveness and manufacturing efficiency.

In addition, by forming the battery module assembly 1 of a frameless structure, the assembling system 10 according to this embodiment may secure high energy density while realizing a slimmer and more compact structure compared to a conventional cell frame structure.

Hereinafter, the assembling system 10 according to this embodiment will be described in more detail.

The first transfer device 100 may include an upper conveyor 110 and a lower conveyor 130.

The upper conveyor 110 may transfer the two rows of battery cells 3. To this end, two rows of conveyor belt lines for transferring the two rows of battery cells 3 may be provided in the upper conveyor 110.

The lower conveyor 130 may guide the two rows of battery cells 3 to the aligning device 200. To this end, two rows of conveyor belt lines for transferring the two rows of battery cells 3 may be provided in the lower conveyor 130.

The lower conveyor 130 may be disposed below the upper conveyor 110 at a predetermined distance from the upper conveyor 110.

In this embodiment, through the first transfer device 100 including the upper conveyor 110 and the lower conveyor 130, which are divisionally arranged vertically, the entire conveyor line may be reduced compared to a structure in which a straight conveyor is arranged long.

Therefore, in this embodiment, the assembly space may be minimized by reducing the length of the entire assembly line through the first transfer device 100. Accordingly, in this embodiment, it is possible to optimize the entire assembly space as well as to reduce the construction cost for constructing the assembling system 10.

The first transfer device 100 may include a lift unit 150.

The lift unit 150 may move up and down between the upper conveyor 110 and the lower conveyor 130, and may transfer the two rows of battery cells 3 of the upper conveyor 110 to the lower conveyor 130.

The lift unit 150 may be provided to be slidable along a ceiling rail 600 provided on the ceiling of the assembling system 10. Accordingly, the lift unit 150 may be movable in both horizontal and vertical directions within the assembling system 10.

The aligning device 200 is provided in the assembling system 10 of the battery module assembly (1, see FIG. 30), and assembles two rows of battery cells 3 and the cooling unit 5 to form a cell assembly.

Specifically, the aligning device 200 may form the cell assembly 7 by mutually bonding the cooling unit 5 between the two rows of battery cells 3. The cell assembly 7 is provided as an assembly of the battery cells 3 and the cooling unit 5 through the aligning device 200.

Hereinafter, the aligning device 200 according to this embodiment will be described in more detail.

FIG. 2 is a schematic diagram for explaining an aligning device of the assembling system for a battery module assembly of FIG. 1, FIG. 3 is a diagram for explaining the main part of the aligning device of FIG. 2, and FIG. 4 is a schematic cross-sectional view of the aligning device of FIG. 2.

Referring to FIGS. 2 to 4 and FIG. 1 above, the aligning device 200 may include a guide jig 210, a cell spacing adjusting jig 220, and a cooling unit gripper 230.

The guide jig 210 is for supporting the two rows of battery cells 3 and is provided as a pair. The pair of guide jigs 210 is provided to support the battery cells 3 of each row.

The cell spacing adjusting jig 220 is connected to the pair of guide jigs 210 and adjusts the spacing of battery cells 3 in each row. The cell spacing adjusting jig 220 is provided as a pair and may be slidably mounted on each guide jig 210.

The cooling unit gripper 230 places the cooling unit 5 between the pair of guide jigs 210. The cooling unit grippers 230 are provided as a pair and may support both ends of the cooling unit 5.

The aligning device 200 according to this embodiment adjusts the spacing of the two rows of battery cells 3 by the sliding of the guide jig 210 and the cell spacing adjusting jig 220 in a state in which the two rows of battery cells 3 are placed in a standing state with the cooling unit 5 interposed therebetween.

Specifically, the pair of guide jigs 210 may be provided to be slidable along a direction toward the cooling unit gripper 230 and a direction opposite to the cooling unit gripper 226. That is, the pair of guide jigs 210 may be provided to be slidable along a direction toward the cooling unit 5 and a direction opposite to the cooling unit 5 while supporting the battery cells 3 in each row.

Here, the pair of guide jigs 210 may pressurize the battery cells 3 of each row through the sliding operation to bring the battery cells 3 of each row into close contact with both side surfaces of the cooling unit 5.

The cell spacing adjusting jig 220 is provided as a pair and is slidably mounted on one side of the pair of guide jigs 210, and at least a part thereof may penetrate the pair of guide jigs 210 during the sliding to adjust the spacing of the battery cells 3 in each row while sliding between the battery cells 3 of each row.

The pair of cell spacing adjusting jigs 220 may include an adjusting jig body 222 and a spacing adjusting portion 226, respectively.

The adjusting jig body 222 may be slidably mounted on one side of each guide jig 210. The adjusting jig body 222 may be disposed to face the battery cells 3 with the guide jig 210 interposed therebetween.

The spacing adjusting portion 226 is provided in plurality and protrudes from the adjusting jig body 222 to a predetermined length, and during the sliding, the spacing adjusting portion 226 may penetrate each guide jig 210 and slide between the battery cells 3 in each row to widen the spacing between the battery cells 3 in each row at a predetermined interval.

The plurality of spacing adjusting portions 226 may be spaced apart from each other by a predetermined distance at equal intervals along the longitudinal direction of the adjusting jig body 222. Accordingly, according to the sliding operation of the plurality of spacing adjusting portions 226, the spacing between the battery cells 3 in each row may be adjusted at equal intervals.

The aligning device 200 may include a cell support 240.

The cell support 240 is provided on the pair of guide jigs 210 and may support the battery cells 3. The cell support 240 may guide the battery cells 3 seated on the pair of guide jigs 210 to be supported more stably.

The cell support 240 may be provided as a magnetic member. The cell support 240 may be provided in plurality. The plurality of cell supports 240 may be provided at a position facing the battery cells 3 when the battery cells 3 are seated on the guide jig 210.

The aligning device 200 may include an aligning gripper 250.

The aligning gripper 250 is provided on the upper side of the pair of guide jigs 210, and may pressurize and fix the upper end of two rows of battery cells 3 disposed with the cooling unit 5 interposed therebetween.

When assembling the cell assembly 7, the aligning gripper 250 may further increase the coupling solidity in the upper part of the battery cells 3 and the cooling unit 5.

In addition, the aligning gripper 250 may guide a subsequent transfer process of the cell assembly 7 provided with the battery cells 3 and the cooling unit 5.

The aligning device 200 may form the cell assembly 7 by mutually aligning and bonding the cooling unit 5 between the two rows of battery cells 3.

Referring back to FIG. 1, the second transfer device 300 may be provided to be movable along the ceiling of the assembling system 10 of the battery module assembly (1, see FIG. 30).

Specifically, like the lift unit 150 of the first transfer device 100, the second transfer device 300 may be slidably mounted on the ceiling rail 600. In addition, like the lift unit 150 of the first transfer device 100, the second transfer device 300 may be provided to be movable up and down in a vertical direction.

Meanwhile, the second transfer device 300 may also be integrated with the lift unit 150. That is, the second transfer device 300 and the lift unit 150 of the first transfer device 100 may be provided as one lifting body.

The second transfer device 300 may cure the cell assembly 7 at room temperature during the transfer. To this end, the second transfer device 300 may be provided with components for curing the cell assembly 7 at room temperature.

In this embodiment, the curing process of the cell assembly 7 may be performed during the transfer of the second transfer device 300 provided on the ceiling rail 600, so it is possible to save space in the curing process and further shorten the assembly process time by reducing the takt time of the assembly process.

During the transfer, the second transfer device 300 may lift and transfer the cell assembly 7 from the aligning device 200 without changing the direction of the cell assembly 7. Accordingly, in this embodiment, during the transfer, a rotation process for adjusting the insertion direction of the battery cells 3 of the cell assembly 7 is not separately required, so the process efficiency may be further increased.

The structure assembling device 400 may form the battery module assembly 1 by arranging a plurality of side structure units 9 between the battery cells 3 of at least one cell assembly 7 transferred by the second transfer device 300.

Specifically, the structure assembling device 400 may form the battery module assembly 1 by bonding the plurality of side structure units 9 and the at least one cell assembly 7 to each other.

In this embodiment, the battery module assembly 1 provided with the battery cells 3, the cooling unit 5, and the side structure units 9 may be assembled through the structure assembling device 400.

Hereinafter, the structure assembling device 400 will be described in more detail.

FIG. 5 is a schematic diagram for explaining a structure assembling device of the assembling system for a battery module assembly of FIG. 1.

Referring to FIG. 5 and FIG. 1 above, the structure assembling device 400 may include an assembling base 410 and a sliding jig 430.

The assembling base 410 may guide alignment of the at least one cell assembly 7 and the at least one side structure unit 9 to form the battery module assembly 1.

The sliding jig 430 is slidably provided on the assembling base 410 and may bring the at least one cell assembly 7 and the at least one side structure unit 9 into close contact with each other through the sliding.

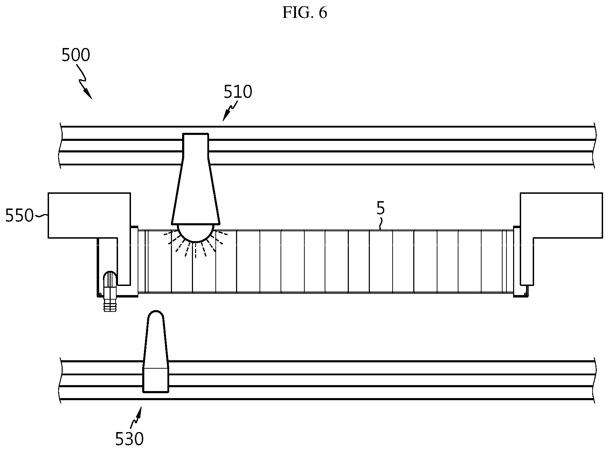

FIG. 6 is a schematic diagram for explaining a pre-working device of the assembling system for a battery module assembly of FIG. 1.

Referring to FIG. 6 and FIG. 1 above, prior to the assembly process of the cell assembly 7 through the aligning device 200 and the assembly process of the battery module assembly 1 through the structure assembling device 400, the pre-working device 500 may perform the preprocessing process of the cooling unit 5 and the side structure unit 9.

The pre-working device 500 may include a plasma processing unit 510, an adhesive processing unit 530, and a direction changing unit 550.

The plasma processing unit 510 is for treating plasma P toward the cooling unit 5, and may be slidably provided along the longitudinal direction of the cooling unit 5.

The adhesive processing unit 530 is for applying adhesive G to the cooling unit 5 and the side structure unit 9, and may be slidably provided along the longitudinal direction of the cooling unit 5 and the side structure unit 9.

The direction changing unit 550 may guide the treatment of the plasma P and the application of the adhesive G and support the cooling unit 5 or the side structure unit 9 during the treatment of the plasma P or the application of the adhesive G.

The direction changing unit 550 may change the direction of the cooling unit 5 or the side structure unit 9 so that the treatment of the plasma P or the application of the adhesive G may be performed to both side surfaces of the cooling unit 5 or the side structure unit 9.

Meanwhile, the assembling system 10 may include the ceiling rail 600.

Referring back to FIG. 1, the ceiling rail 600 is provided on the ceiling of the assembling system 10 and may guide the sliding operation of the lift unit 150 of the first transfer device 100 and the second transfer device 300.

In the assembling system 10 according to this embodiment, since the ceiling rail 600 is provided on the ceiling of the system to guide the transfer, etc., space utilization of the entire system may be maximized and space for system equipment construction may be saved.

Hereinafter, the assembly process of the battery module assembly 1 through the assembling system 10 of the battery module assembly 1 according to this embodiment will be described in more detail.

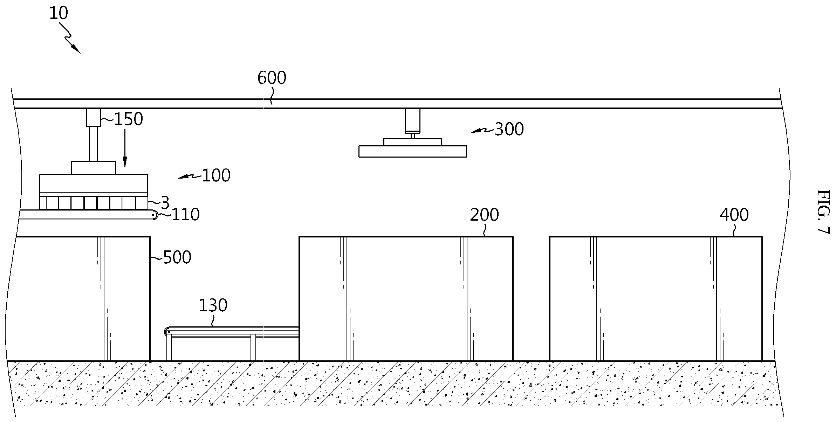

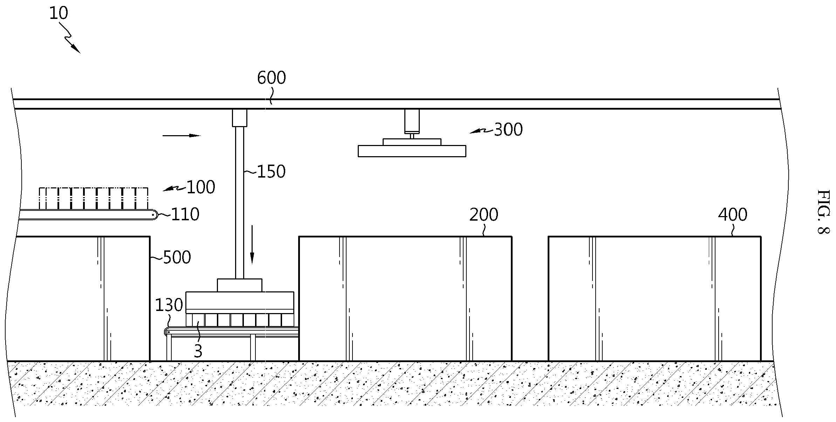

FIGS. 7 and 8 are diagrams for explaining the operation of a first transfer device of the assembling system for a battery module assembly of FIG. 1.

Referring to FIGS. 7 and 8, the lift unit 150 of the first transfer device 100 may transfer the two rows of battery cells 3 on the first conveyor 110 toward the second conveyor 130.

Here, the lift unit 150 may lift the two rows of battery cells 3 on the first conveyor 110 through adsorption, etc., move them along the ceiling rail 600 toward the second conveyor 130 by a predetermined distance, and then descend to place them on the second conveyor 130.

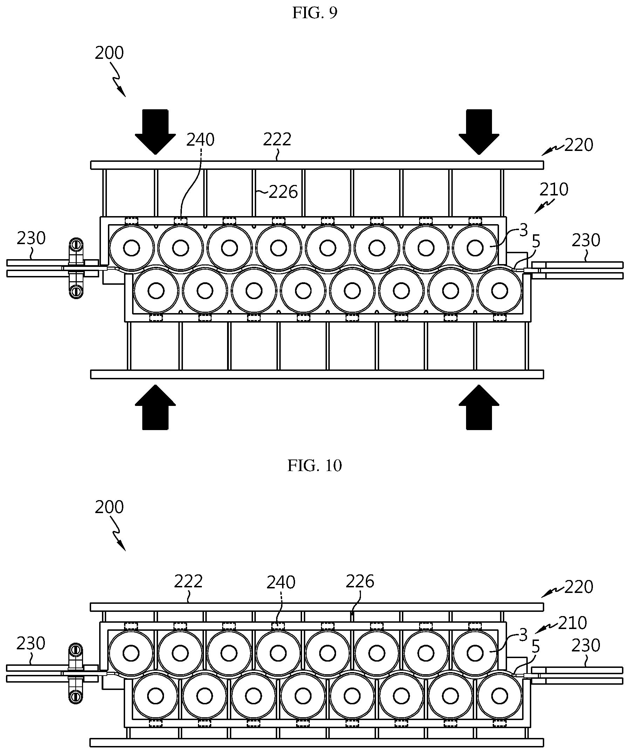

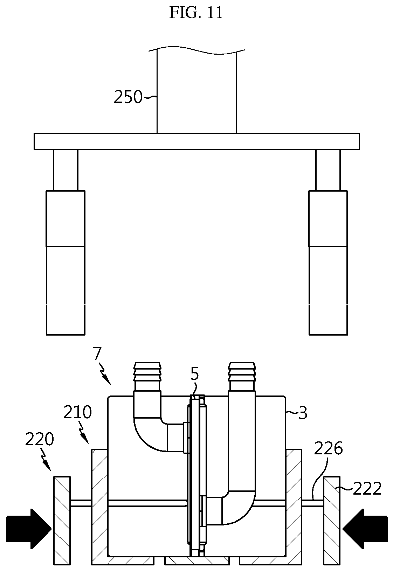

FIGS. 9 to 13 are diagrams for explaining the operation of the aligning device of the assembling system for a battery module assembly of FIG. 1.

Referring to FIGS. 9 to 13, the aligning device 200 may arrange the cooling unit 5 between the two rows of battery cells 3 transferred from the first transfer device 100 to bring the two rows of battery cells 3 and the cooling unit 5 into close contact, thereby forming the cell assembly 7.

Specifically, referring to FIGS. 9 to 11, the pair of guide jigs 210 may pressurize the battery cells 3 of each row to come into close contact with the cooling unit 5. Here, the pair of cell spacing adjusting jigs 220 may adjust the spacing between the battery cells 3 in each row while sliding through the guide jig 210.

Since the adhesive G is applied to both side surfaces of the cooling unit 5 through the pre-working device 500, the battery cells 3 and the cooling unit 5 may be bonded to each other when they are in close contact. The cell assembly 7 may be formed by mutually bonding the battery cells 3 and the cooling unit 5.

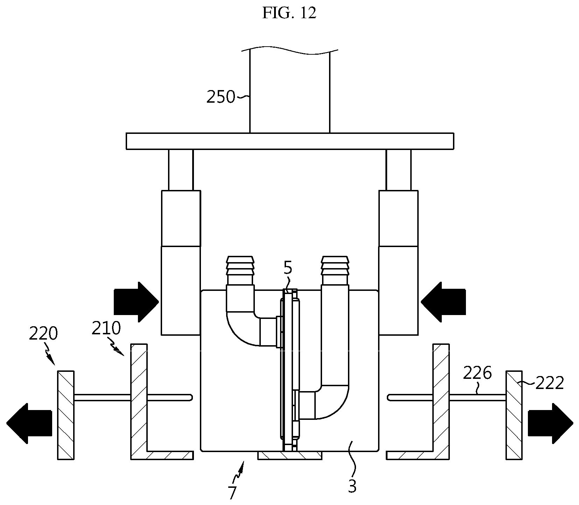

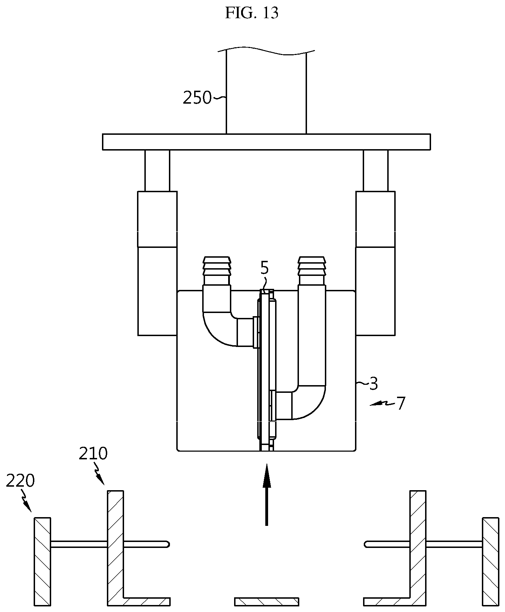

Referring to FIGS. 12 and 13, the pair of guide jigs 210 may slide in a direction away from the cell assembly 7, and the aligning gripper 250 may press both sides of the upper end of the cell assembly 7. Accordingly, the coupling strength between the battery cells 3 and the cooling unit 5 at the upper end of the cell assembly 7 may be further increased. Then, the aligning gripper 250 may lift the cell assembly 7 and guide the cell assembly 7 to a subsequent process.

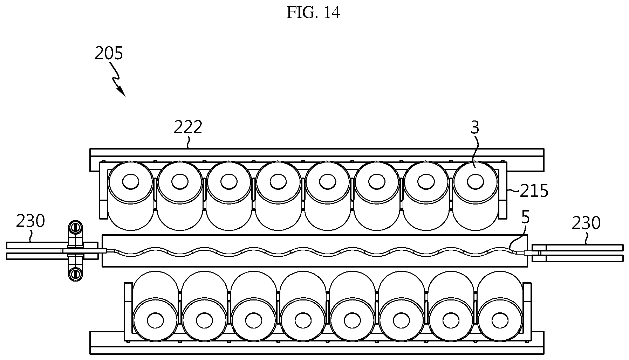

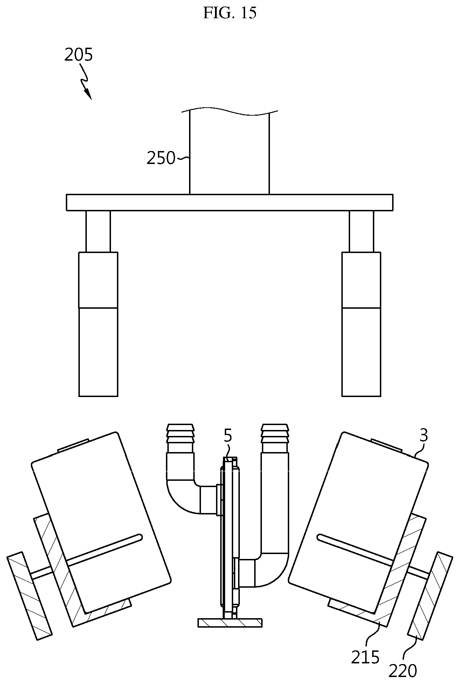

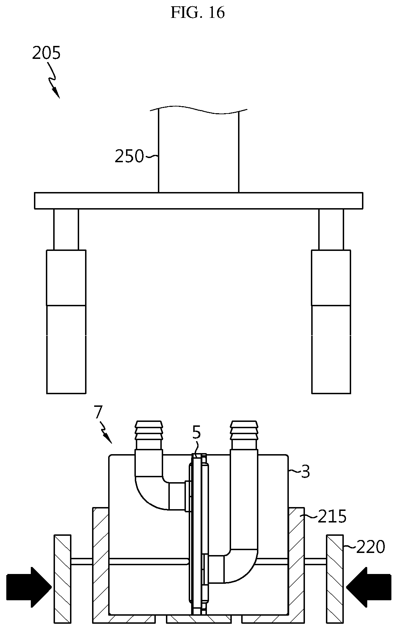

FIGS. 14 to 16 are diagrams for explaining the operation of an aligning device according to another embodiment of the assembling system for a battery module assembly of FIG. 1.

Since the aligning device 200 according to this embodiment is similar to the aligning device 205 of the previous embodiment, redundant description of components identical as or similar to those of the previous embodiment will be omitted, and hereinafter, the focus will be on differences from the previous embodiment.

Referring to FIGS. 14 to 16, the aligning device 205 may include a pair of guide jigs 215 provided to be tiltable at a predetermined angle with the cooling unit gripper 230 interposed therebetween.

The pair of guide jigs 215 may be arranged to be inclined at a predetermined angle before the two rows of battery cells 3 and the cooling unit 5 come into close contact, so that the battery cells 3 in each row may be more stably supported.

Since the pair of guide jigs 215 are tilted at the predetermined angle, it is possible to press the battery cells 3 of each row to come into close contact with the cooling unit 5.

As such, since the pair of guide jigs 215 are provided to implement both sliding and tilting operations, the two rows of battery cells 3 may be more stably supported during the alignment or pressing operation.

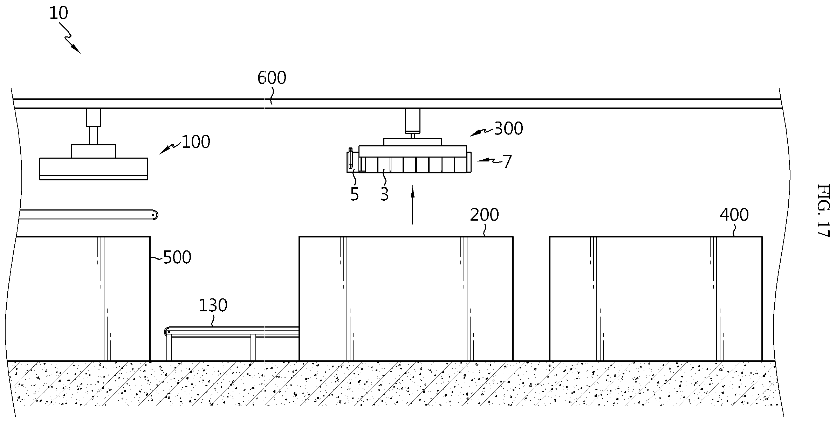

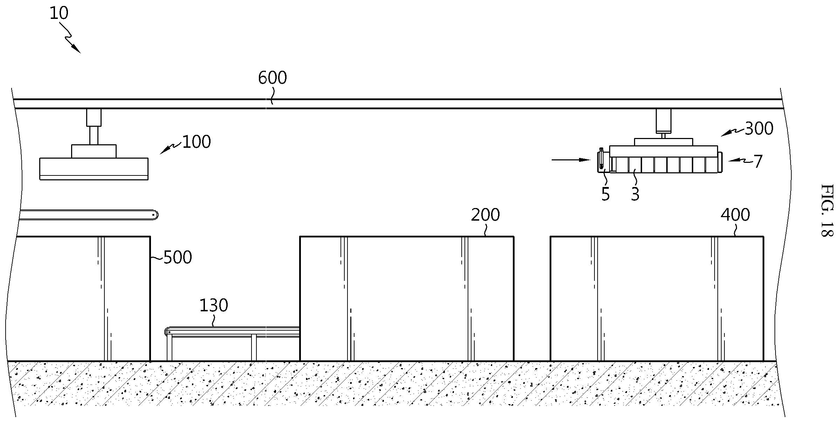

FIGS. 17 and 18 are diagrams for explaining the operation of a second transfer device of the assembling system for a battery module assembly of FIG. 1.

Referring to FIGS. 17 and 18, the second transfer device 300 may lift the cell assembly 7 from the aligning device 200 and transfer it toward the structure assembling device 400.

During such a transfer operation, the second transfer device 300 may cure the cell assembly 7 at room temperature to further increase the bonding strength of the cell assembly 7. As such, in this embodiment, during the transfer of the second transfer device 300, the cell assembly 7 may be cured, so that assembly fixation efficiency may be further improved.

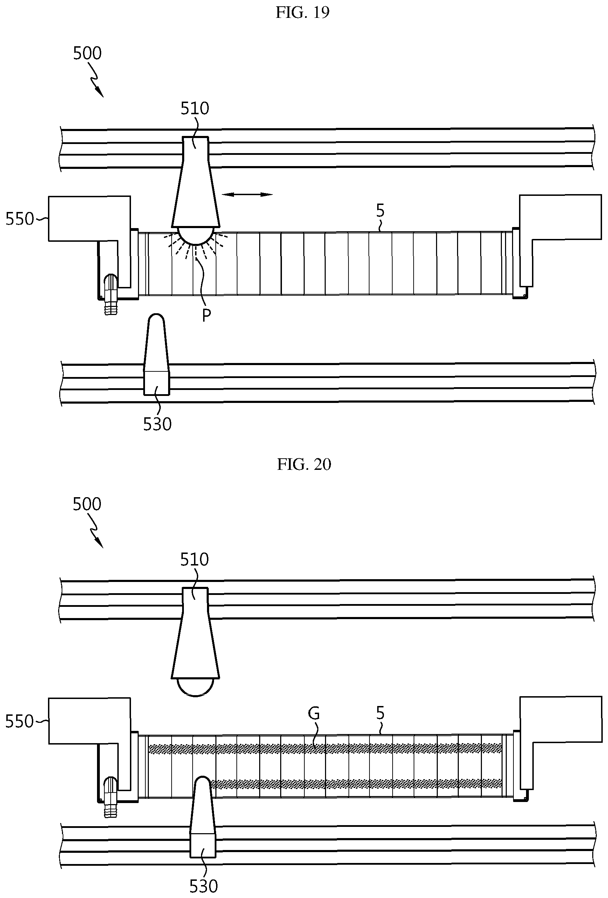

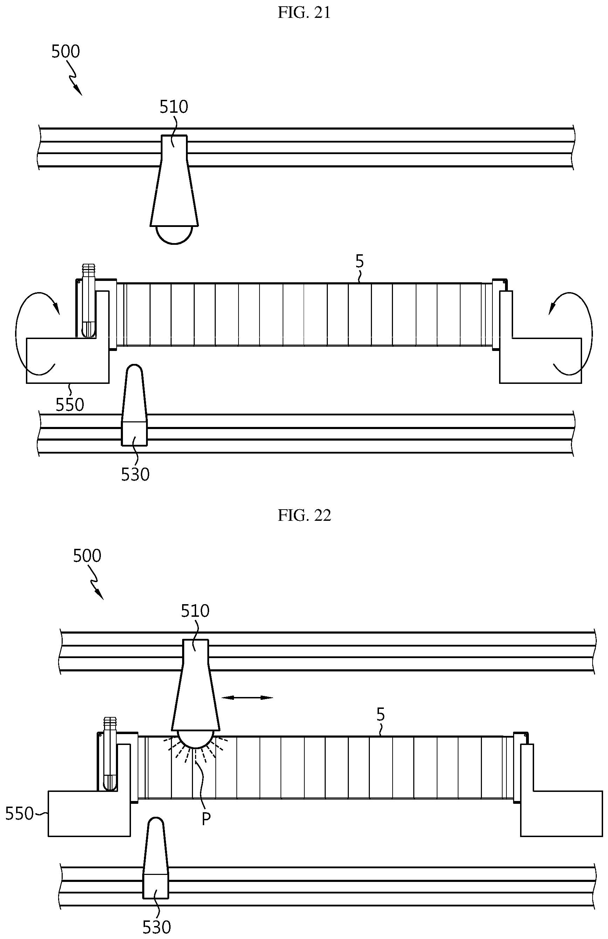

FIGS. 19 to 23 are diagrams for explaining the pre-processing operation of a cooling unit through the pre-working device of the assembling system for a battery module assembly of FIG. 1.

Referring to FIGS. 19 to 23, the pre-working device 500 may perform a preprocessing process before transferring the cooling unit 5 toward the aligning device 200.

First, the plasma processing unit 510 of the pre-working device 500 may treat plasma P on one side surface of both side surfaces of the cooling unit 5 while sliding along the longitudinal direction of the cooling unit 5.

Thereafter, the adhesive processing unit 530 of the pre-working device 500 may apply the adhesive G to one side surface of both side surfaces of the cooling unit 5 while sliding along the longitudinal direction of the cooling unit 5.

When the treatment of the plasma P and the application of the adhesive G are completed on one side surface of both side surfaces of the cooling unit 5, the direction changing unit 550 may change the direction of the cooling unit 5.

Thereafter, the plasma processing unit 510 of the pre-working device 500 may treat plasma P on the other side surface of both side surfaces of the cooling unit 5 while sliding along the longitudinal direction of the cooling unit 5.

In addition, the adhesive processing unit 530 of the pre-working device 500 may apply the adhesive G to the other side surface of both side surfaces of the cooling unit 5 while sliding along the longitudinal direction of the cooling unit 5.

Thereafter, the pre-working device 500 may transfer the cooling unit 5, where the treatment of the plasma P and the application of the adhesive G are performed on both side surfaces, toward the aligning device 200.

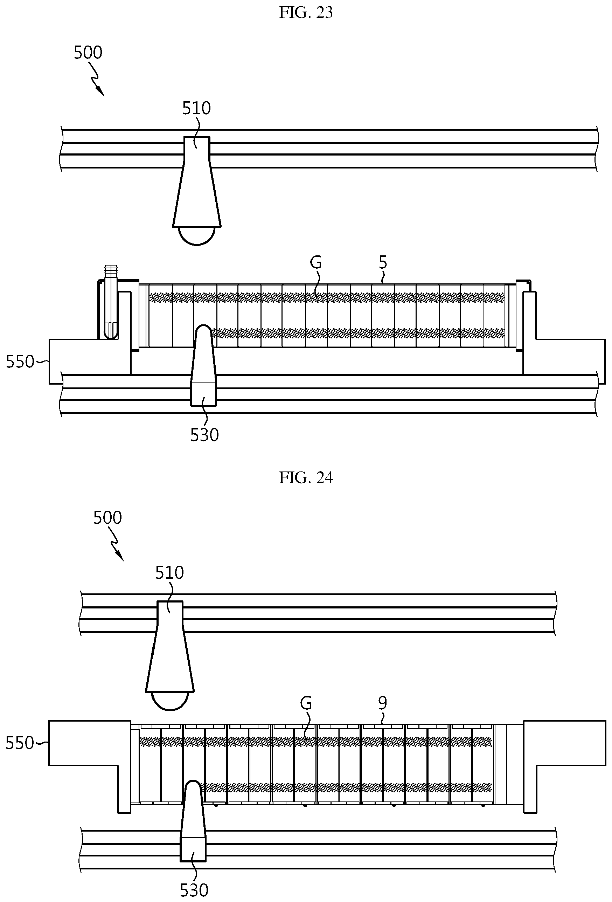

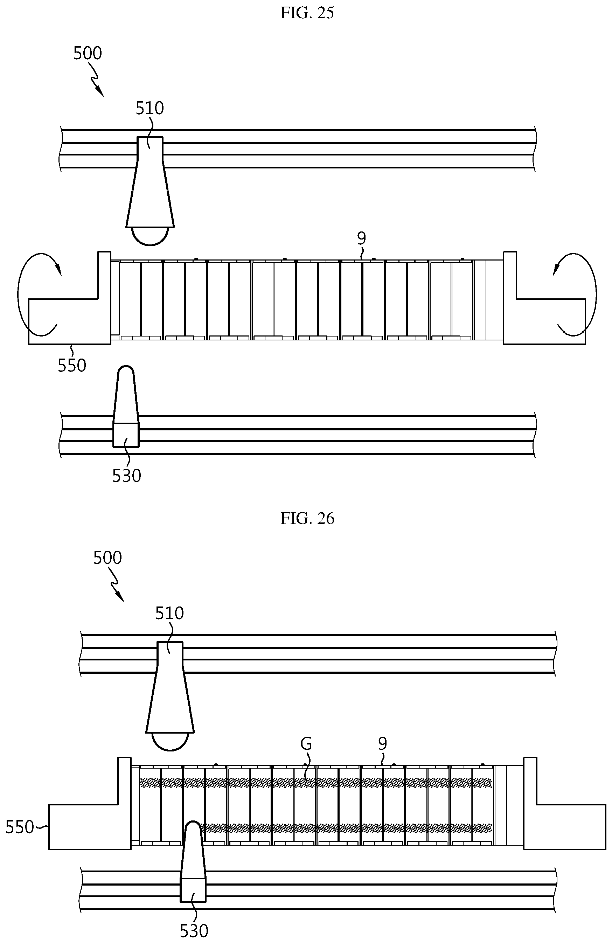

FIGS. 24 to 26 are diagrams for explaining the pre-processing operation of a side structure unit through the pre-working device of the assembling system for a battery module assembly of FIG. 1.

Referring to FIGS. 24 to 26, the pre-working device 500 may perform a preprocessing process before transferring the side structure unit 9 toward the structure assembling device 400.

First, the adhesive processing unit 530 of the pre-working device 500 may apply the adhesive G to one side surface of both side surfaces of the side structure unit 9 while sliding along the longitudinal direction of the side structure unit 9.

When the application of the adhesive G is completed on one side surface of both side surfaces of the side structure unit 9, the direction changing unit 550 may change the direction of the side structure unit 9.

Thereafter, the adhesive processing unit 530 of the pre-working device 500 may apply the adhesive G to the other side surface of both side surfaces of the side structure unit 9 while sliding along the longitudinal direction of the side structure unit 9.

Thereafter, the pre-working device 500 may transfer the side structure unit 9, where the adhesive G is applied to both side surfaces, toward the structure assembling device 400.

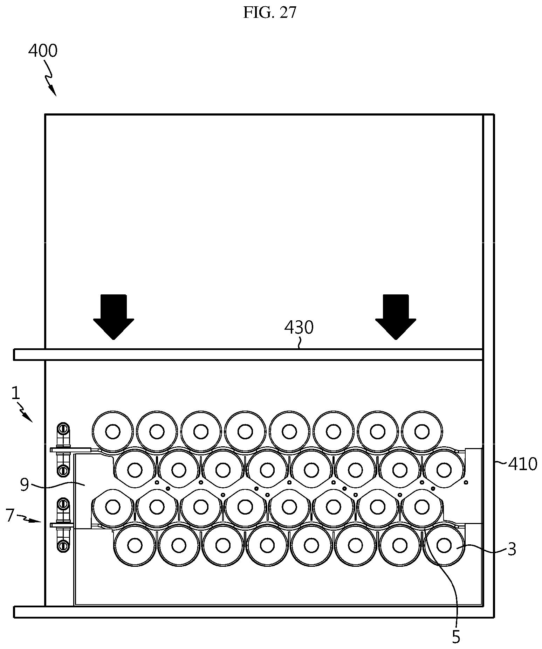

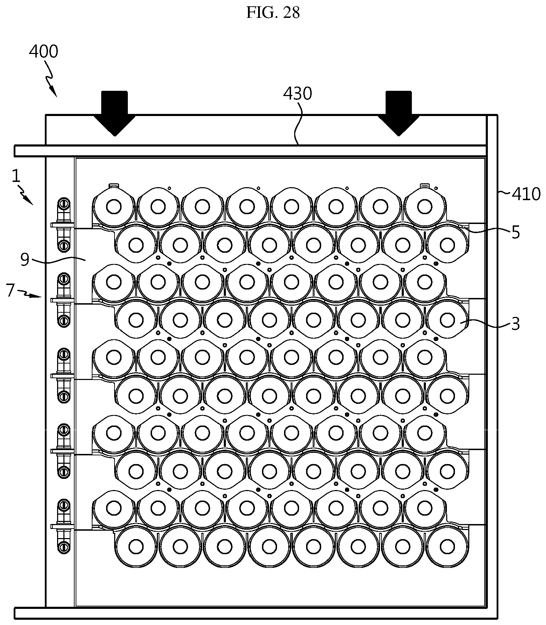

FIGS. 27 to 29 are diagrams for explaining the operation of a structure assembling device of the assembling system for a battery module assembly of FIG. 1.

Referring to FIGS. 27 to 29, the assembling base 410 of the structure assembling device 400 may arrange the side structure unit 9 and the cell assembly 7 to be alternately disposed.

The sliding jig 430 may bring the side structure units 9 into close contact with the cell assembly 7 while sliding along the assembling base 410. Accordingly, the side structure unit 9 and the cell assembly 7 may be bonded to each other while closely contacting each other to form the battery module assembly 1.

Hereinafter, a method of assembling the battery module assembly 1 of the present disclosure through the assembly process through the assembling system 10 will be described in detail.

In this embodiment, the assembly method of the battery module assembly (1, see FIG. 30) includes the steps of transferring a plurality of battery cells 3 in two rows, arranging a cooling unit 5 between the battery cells 3 transferred in two rows to assemble a cell assembly 7, transferring the cell assembly 7 toward the side structure unit 9 that covers the battery cells 3 of the cell assembly 7, and covering the battery cells 3 of the cell assembly 7 with the side structure unit 9 to assemble the battery module assembly 1.

Here, the step of transferring the plurality of battery cells 3 in two rows includes the steps of transferring the two rows of battery cells 3 through the upper conveyor 110 and transferring the two rows of battery cells 3 of the upper conveyor 110 to the lower conveyor 130 for assembling the cell assembly 7.

Here, the cell assembly 7 may be formed by mutually bonding the cooling unit 5 aligned between the two rows of battery cells 3 to the two rows of battery cells 3 through adhesive G.

In addition, the battery module assembly 1 may be formed by mutually bonding the battery cells 3 of the cell assembly 7 and the side structure unit 9 through adhesive G.

Meanwhile, the cell assembly 7 may be cured at room temperature when transferred to the side structure unit 9. Accordingly, the battery cells 3 and the cooling unit 5 of the cell assembly 7 may be more firmly coupled to each other prior to being assembled with the side structure unit 9. In addition, when the cell assembly is transferred toward the side structure unit 9, it may be transferred toward the side structure unit 9 along the ceiling.

FIG. 30 is a diagram for explaining a battery module assembly assembled through the assembling system for a battery module assembly of FIG. 1.

Referring to FIG. 30, the battery module assembly 1 according to this embodiment may include a plurality of cell assembly 7 having a cooling unit 5 between the battery cells 3, and a plurality of side structure units 9 provided between the plurality of cell assemblies 7 and forming both outermost side surfaces of the battery module assembly 1.

Since the battery module assembly 1 is formed only of the plurality of cell assemblies 7 and the plurality of side structure units 9, a frameless structure may be implemented without the same conventional frame structure.

Since the battery module assembly 1 manufactured through the assembling system 10 according to this embodiment is provided as a frameless structure, it may be slimmer than a conventional frame structure and may secure a relatively high energy density.

According to various embodiments as described above, it is possible to provide an aligning device 200 capable of implementing a frameless structure and an assembling system 10 for a battery module assembly 1 including the same.

In addition, according to various embodiments as described above, it is possible to provide an aligning device 200 capable of reducing manufacturing cost and minimizing an assembly space, and an assembling system 10 for a battery module assembly 1 including the

## Claims

1. An assembling system (10) for a battery module assembly (1), comprising an aligning device (200), which assembles two rows of battery cells (3) and a cooling unit (5) to form a cell assembly (7), the aligning device (200) comprising:
a pair of guide jigs (210, 215) configured to support the two rows of battery cells (3);
a cell spacing adjusting jig (220) connected to the pair of guide jigs (210) and configured to adjust the spacing of battery cells (3) in each row; and
a cooling unit gripper (230) configured to dispose the cooling unit (5) between the pair of guide jigs (210).

2. The assembling system (10) for a battery module assembly (1) according to claim 1, wherein the pair of guide jigs (210, 215) are provided to be slidable along a direction toward the cooling unit gripper (230) and a direction opposite to the cooling unit gripper (230).

3. The assembling system (10) for a battery module assembly (1) according to claim 2, wherein the pair of guide jigs (210) pressurize the battery cells (3) in each row through the sliding, so that the battery cells (3) in each row come into close contact with both side surfaces of the cooling unit (5).

4. The assembling system (10) for a battery module assembly (1) according to claim 1, wherein the cell spacing adjusting jig (220) is slidably mounted on one side of the pair of guide jigs (210, 215), and during the sliding, at least a part thereof penetrates the pair of guide jigs (210, 215) and slides between the battery cells (3) in each row to adjust the spacing of the battery cells (3) in each row.

5. The assembling system (10) for a battery module assembly (1) according to claim 4, wherein the cell spacing adjusting jig (220) includes:
an adjusting jig body (222) slidably mounted on one side of each guide jig (210, 215); and
a plurality of spacing adjusting portions (226) that protrudes from the adjusting jig body (222) by a predetermined length, and during the sliding, slides between the battery cells (3) in each row through each guide jig to widen the spacing of the battery cells (3) in each row at a predetermined interval.

6. The assembling system (10) for a battery module assembly (1) according to claim 5, wherein the plurality of spacing adjusting portions (226) are spaced apart by a predetermined distance at equal intervals from each other along a longitudinal direction of the adjusting jig body (222).

7. The assembling system (10) for a battery module assembly (1) T according to claim 1, comprising a cell support (240) provided on the pair of guide jigs (210, 215) and configured to support the battery cells (3).

8. The assembling system (10) for a battery module assembly (1) according to claim 7, wherein the cell support (240) is provided as a magnetic member.

9. The assembling system (10) for a battery module assembly (1) according to claim 1, comprising an aligning gripper (250) provided on an upper side of the pair of guide jigs (210, 215) and configured to pressurize and fix an upper end of two rows of battery cells (3) disposed with the cooling unit (5) interposed therebetween.

10. The assembling system (10) for a battery module assembly (1) according to claim 1, wherein the pair of guide jigs (210, 215) are provided to be tiltable at a predetermined angle with the cooling unit gripper (230) interposed therebetween.

11. The assembling system (10) for a battery module assembly (1) according to claim 1, wherein the cooling unit (5) is mutually bonded between the two rows of battery cells (3) to form the cell assembly (7).

12. The assembling system (10) for a battery module assembly (1) according to claim 1, wherein the assembling system (10) for a battery module assembly (1) includes:
a first transfer device (100) configured to transfer the plurality of battery cells (3) in two rows and guide the plurality of battery cells (3) toward the aligning device (200, 205);
a second transfer device (300) configured to transfer the cell assembly (7) assembled by the aligning device (200, 205) toward a structure assembling device for assembly with a side structure unit that covers the battery cells(3); and
the structure assembling device (400) configured to form the battery module assembly (1) by arranging a plurality of side structure units (9) between the battery cells (3) of at least one cell assembly (7) transferred by the second transfer device (300).

13. The assembling system (10) for a battery module assembly (1) according to claim 12, wherein the cell assembly (7) is formed by bonding the cooling unit (5) aligned between the two rows of battery cells (3) to the two rows of battery cells (7) using an adhesive (G).

14. The assembling system (10) for a battery module assembly (1) according to claim 12, wherein the structure assembling device (400) mutually bonds the plurality of side structure units (9) and the at least one cell assembly (7).

## Patentansprüche

1. Montagesystem (10) für eine Batteriemodulanordnung (1), umfassend eine Ausrichtvorrichtung (200), welche zwei Reihen von Batteriezellen (3) und eine Kühleinheit (5) zusammenfügt, um eine Zellenanordnung (7) zu bilden, wobei die Ausrichtvorrichtung (200) umfasst:
ein Paar von Halteführungen (210, 215), die konfiguriert sind, um die zwei Reihen von Batteriezellen (3) zu stützen;
eine Zellabstand-Einstellvorrichtung (220), die mit dem Paar von Halteführungen (210) verbunden und konfiguriert ist, um den Abstand von Batteriezellen (3) in jeder Reihe einzustellen; und
einen Kühleinheit-Greifer (230), der konfiguriert ist, um die Kühleinheit (5) zwischen dem Paar von Halteführungen (210) anzuordnen.

2. Montagesystem (10) für eine Batteriemodulanordnung (1) nach Anspruch 1, wobei das Paar von Halteführungen (210, 215) so vorgesehen ist, dass es entlang einer Richtung zum Kühleinheit-Greifer (230) hin und einer zum Kühleinheit-Greifer (230) entgegengesetzten Richtung verschiebbar ist.

3. Montagesystem (10) für eine Batteriemodulanordnung (1) nach Anspruch 2, wobei das Paar von Halteführungen (210) die Batteriezellen (3) in jeder Reihe durch das Verschieben unter Druck setzt, sodass die Batteriezellen (3) in jeder Reihe in engen Kontakt mit beiden Seitenflächen der Kühleinheit (5) kommen.

4. Montagesystem (10) für eine Batteriemodulanordnung (1) nach Anspruch 1, wobei die Zellabstand-Einstellvorrichtung (220) verschiebbar an einer Seite des Paares von Halteführungen (210, 215) montiert ist, und während des Verschiebens zumindest ein Teil davon das Paar von Halteführungen (210, 215) durchdringt und sich zwischen den Batteriezellen (3) in jeder Reihe verschiebt, um den Abstand der Batteriezellen (3) in jeder Reihe einzustellen.

5. Montagesystem (10) für eine Batteriemodulanordnung (1) nach Anspruch 4, wobei die Zellabstand-Einstellvorrichtung (220) einschließt:
einen Einstellvorrichtungskörper (222), der verschiebbar an einer Seite jeder Halteführung (210, 215) montiert ist; und
eine Vielzahl von Abstand-Einstellabschnitten (226), die von dem Einstellvorrichtungskörper (222) um eine vorbestimmte Länge vorstehen und sich während des Verschiebens zwischen den Batteriezellen (3) in jeder Reihe durch jede Halteführung verschieben, um den Abstand der Batteriezellen (3) in jeder Reihe in einem vorbestimmten Intervall zu vergrößern.

6. Montagesystem (10) für eine Batteriemodulanordnung (1) nach Anspruch 5, wobei die Vielzahl von Abstand-Einstellabschnitten (226) durch einen vorbestimmten Abstand in gleichen Intervallen voneinander entlang einer Längsrichtung des Einstellvorrichtungskörpers (222) beabstandet sind.

7. Montagesystem (10) für eine Batteriemodulanordnung (1) nach Anspruch 1, umfassend einen Zellenträger (240), der an dem Paar von Halteführungen (210, 215) vorgesehen und konfiguriert ist, um die Batteriezellen (3) zu stützen.

8. Montagesystem (10) für eine Batteriemodulanordnung (1) nach Anspruch 7, wobei der Zellenträger (240) als ein magnetisches Element vorgesehen ist.

9. Montagesystem (10) für eine Batteriemodulanordnung (1) nach Anspruch 1, umfassend einen Ausrichtgreifer (250), der an einer Oberseite des Paares von Halteführungen (210, 215) vorgesehen und konfiguriert ist, um ein oberes Ende von zwei Reihen von Batteriezellen (3), die mit der dazwischen angeordneten Kühleinheit (5) angeordnet sind, unter Druck zu setzen und zu fixieren.

10. Montagesystem (10) für eine Batteriemodulanordnung (1) nach Anspruch 1, wobei das Paar von Halteführungen (210, 215) so vorgesehen ist, dass es um einen vorbestimmten Winkel kippbar ist, wobei der Kühleinheit-Greifer (230) dazwischen angeordnet ist.

11. Montagesystem (10) für eine Batteriemodulanordnung (1) nach Anspruch 1, wobei die Kühleinheit (5) zwischen den beiden Reihen von Batteriezellen (3) miteinander verbunden wird, um die Zellenanordnung (7) zu bilden.

12. Montagesystem (10) für eine Batteriemodulanordnung (1) nach Anspruch 1, wobei das Montagesystem (10) für eine Batteriemodulanordnung (1) einschließt:
eine erste Übertragungsvorrichtung (100), die konfiguriert ist, um die Vielzahl von Batteriezellen (3) in zwei Reihen zu übertragen und die Vielzahl von Batteriezellen (3) zur Ausrichtvorrichtung (200, 205) hin zu führen;
eine zweite Übertragungsvorrichtung (300), die konfiguriert ist, um die von der Ausrichtvorrichtung (200, 205) zusammengefügte Zellenanordnung (7) zu einer Strukturmontagevorrichtung hin zur Montage mit einer Seitenstruktureinheit, die die Batteriezellen (3) abdeckt, zu übertragen; und
die Strukturmontagevorrichtung (400), die konfiguriert ist, um die Batteriemodulanordnung (1) durch Anordnen einer Vielzahl von Seitenstruktureinheiten (9) zwischen den Batteriezellen (3) von mindestens einer Zellenanordnung (7), die von der zweiten Übertragungsvorrichtung (300) übertragen wird, zu bilden.

13. Montagesystem (10) für eine Batteriemodulanordnung (1) nach Anspruch 12, wobei die Zellenanordnung (7) durch Verbinden der Kühleinheit (5), die zwischen den beiden Reihen von Batteriezellen (3) ausgerichtet ist, mit den beiden Reihen von Batteriezellen (7) unter Verwendung eines Klebstoffs (G) gebildet wird.

14. Montagesystem (10) für eine Batteriemodulanordnung (1) nach Anspruch 12, wobei die Strukturmontagevorrichtung (400) die Vielzahl von Seitenstruktureinheiten (9) und die mindestens eine Zellenanordnung (7) miteinander verbindet.

## Revendications

1. Système d'assemblage (10) pour un ensemble de module de batterie (1), comprenant un dispositif d'alignement (200), qui assemble deux rangées de cellules de batterie (3) et une unité de refroidissement (5) pour former un ensemble de cellules (7), le dispositif d'alignement (200) comprenant :
une paire de gabarits de guidage (210, 215) configurés pour supporter les deux rangées de cellules de batterie (3) ;
un gabarit d'ajustement d'espacement de cellules (220) connecté à la paire de gabarits de guidage (210) et configuré pour ajuster l'espacement des cellules de batterie (3) dans chaque rangée ; et
une pince d'unité de refroidissement (230) configurée pour disposer l'unité de refroidissement (5) entre la paire de gabarits de guidage (210).

2. Système d'assemblage (10) pour un ensemble de module de batterie (1) selon la revendication 1, dans lequel la paire de gabarits de guidage (210, 215) est prévue pour être coulissante le long d'une direction vers la pince d'unité de refroidissement (230) et d'une direction opposée à la pince d'unité de refroidissement (230).

3. Système d'assemblage (10) pour un ensemble de module de batterie (1) selon la revendication 2, dans lequel la paire de gabarits de guidage (210) met sous pression les cellules de batterie (3) dans chaque rangée par le coulissement, de sorte que les cellules de batterie (3) dans chaque rangée viennent en contact étroit avec les deux surfaces latérales de l'unité de refroidissement (5).

4. Système d'assemblage (10) pour un ensemble de module de batterie (1) selon la revendication 1, dans lequel le gabarit d'ajustement d'espacement de cellules (220) est monté de manière coulissante sur un côté de la paire de gabarits de guidage (210, 215), et pendant le coulissement, au moins une partie de celui-ci pénètre la paire de gabarits de guidage (210, 215) et coulisse entre les cellules de batterie (3) dans chaque rangée pour ajuster l'espacement des cellules de batterie (3) dans chaque rangée.

5. Système d'assemblage (10) pour un ensemble de module de batterie (1) selon la revendication 4, dans lequel le gabarit d'ajustement d'espacement de cellules (220) inclut :
un corps de gabarit d'ajustement (222) monté de manière coulissante sur un côté de chaque gabarit de guidage (210, 215) ; et
une pluralité de parties d'ajustement d'espacement (226) qui font saillie du corps de gabarit d'ajustement (222) sur une longueur prédéterminée, et pendant le coulissement, coulissent entre les cellules de batterie (3) dans chaque rangée à travers chaque gabarit de guidage pour élargir l'espacement des cellules de batterie (3) dans chaque rangée à un intervalle prédéterminé.

6. Système d'assemblage (10) pour un ensemble de module de batterie (1) selon la revendication 5, dans lequel la pluralité de parties d'ajustement d'espacement (226) sont espacées les unes des autres d'une distance prédéterminée à des intervalles égaux le long d'une direction longitudinale du corps de gabarit d'ajustement (222).

7. Système d'assemblage (10) pour un ensemble de module de batterie (1) selon la revendication 1, comprenant un support de cellule (240) prévu sur la paire de gabarits de guidage (210, 215) et configuré pour supporter les cellules de batterie (3).

8. Système d'assemblage (10) pour un ensemble de module de batterie (1) selon la revendication 7, dans lequel le support de cellule (240) est prévu sous la forme d'un élément magnétique.

9. Système d'assemblage (10) pour un ensemble de module de batterie (1) selon la revendication 1, comprenant une pince d'alignement (250) prévue sur un côté supérieur de la paire de gabarits de guidage (210, 215) et configurée pour mettre sous pression et fixer une extrémité supérieure de deux rangées de cellules de batterie (3) disposées avec l'unité de refroidissement (5) interposée entre elles.

10. Système d'assemblage (10) pour un ensemble de module de batterie (1) selon la revendication 1, dans lequel la paire de gabarits de guidage (210, 215) est prévue pour être inclinable d'un angle prédéterminé avec la pince d'unité de refroidissement (230) interposée entre eux.

11. Système d'assemblage (10) pour un ensemble de module de batterie (1) selon la revendication 1, dans lequel l'unité de refroidissement (5) est mutuellement liée entre les deux rangées de cellules de batterie (3) pour former l'ensemble de cellules (7).

12. Système d'assemblage (10) pour un ensemble de module de batterie (1) selon la revendication 1, dans lequel le système d'assemblage (10) pour un ensemble de module de batterie (1) inclut :
un premier dispositif de transfert (100) configuré pour transférer la pluralité de cellules de batterie (3) en deux rangées et guider la pluralité de cellules de batterie (3) vers le dispositif d'alignement (200, 205) ;
un second dispositif de transfert (300) configuré pour transférer l'ensemble de cellules (7) assemblé par le dispositif d'alignement (200, 205) vers un dispositif d'assemblage de structure pour l'assemblage avec une unité de structure latérale qui couvre les cellules de batterie (3) ; et
le dispositif d'assemblage de structure (400) configuré pour former l'ensemble de module de batterie (1) en disposant une pluralité d'unités de structure latérale (9) entre les cellules de batterie (3) d'au moins un ensemble de cellules (7) transféré par le second dispositif de transfert (300).

13. Système d'assemblage (10) pour un ensemble de module de batterie (1) selon la revendication 12, dans lequel l'ensemble de cellules (7) est formé en liant l'unité de refroidissement (5) alignée entre les deux rangées de cellules de batterie (3) aux deux rangées de cellules de batterie (7) en utilisant un adhésif (G).

14. Système d'assemblage (10) pour un ensemble de module de batterie (1) selon la revendication 12, dans lequel le dispositif d'assemblage de structure (400) lie mutuellement la pluralité d'unités de structure latérale (9) et l'au moins un ensemble de cellules (7).
